# EUROPÄISCHE PATENTSCHRIFT

(11) **EP 0 987 080 B1**
(45) Veröffentlichungstag und Bekanntmachung des Hinweises auf die Patenterteilung: **02.07.2003**
(21) Anmeldenummer: 99103760.7
(22) Anmeldetag: 26.02.1999
(51) Int. Cl.: B23K 37/04, B23Q 3/154

(54) **Haltevorrichtung zum Festhalten von Werkstücken in Gestalt ebener Metallblechplatinen**
Holding device for maintaining metal plates
Dispositif de maintien pour retenir des tôles métalliques

(30) Priorität: 05.09.1998 DE 19840612
(43) Veröffentlichungstag der Anmeldung: 22.03.2000
(73) Patentinhaber: Schuler Automation GmbH & Co. KG, 91093 Hessdorf (DE)
(72) Erfinder: Dörner, Reiner, 75031 Eppingen (DE)
(74) Vertreter: Reimold, Otto, Dipl.-Phys.Dr.

(56) Entgegenhaltungen:
- DE-A- 4 026 156
- DE-C- 959 977

## Beschreibung

Die Erfindung betrifft eine Haltevorrichtung zum Festhalten von Werkstücken in Gestalt ebener Metallblechplatinen aus magnetisierbarem Material, deren Ränder entlang einer Verbindungsstrecke miteinander verschweißt werden sollen, mit einer magnetisch aktivierbaren und die aktivierbaren Auflagefläche zum Auflegen der miteinander zu verschweißenden Werkstücke, die von einer Mehrzahl von jeweils eine Teilfläche der Auflagefläche bildenden, gesonderten Polplatten aus magnetisierbarem Material gebildet wird, denen eine aktivierbare und die aktivierbare Magneteinrichtung zugeordnet ist, die sich unterhalb der Polplatten an einer Tragplattenanordnung befindet, wobei die Polplatten lösbar mit der Tragplattenanordnung verbunden sind.

Beispielsweise für die Autoindustrie werden verhältnismäßig große Metallblechplatinen benötigt, die in Pressen zu den jeweiligen Autoteilen umgeformt werden. Solche Platinen werden, insbesondere wenn sie in Anpassung an die beim fertigen Autoteil auftretenden Belastungen Bereiche unterschiedlicher Materialdicke aufweisen sollen, aus einzelnen kleineren Blechplatinen zusammengesetzt, die an den Rändern durch Verschweißen miteinander verbunden werden. Übliche Blechdicken solcher Platinen liegen im Bereich von etwa 0,5 bis 2,5 mm.

Hierzu ist es neben mechanischen Aufspanneinrichtungen, mit deren Hilfe die einzelnen Platinen in ihren miteinander zu verschweißenden Positionen festgehalten werden, bekannt, die verschiedenen Platinen auf eine magnetisch noch unwirksame Auflagefläche zu legen, die nach dem Positionieren aller Platinen magnetisch aktiviert wird, so dass die Platinen durch Magnetkraft auf der Auflagefläche festgehalten werden. Anschließend werden die Platinen dann insbesondere durch Laser-Schweißen der jeweiligen Verbindungsstrecke entlang miteinander verschweißt.

Anstelle einer insgesamt magnetisch aktivierbaren Auflagenfläche könnte man auch eine aus der DE 40 26 156 A1 hervorgehenden Spannplatte verwenden, bei der die Auflagefläche von einer Anzahl von verteilt angeordneten, gemeinsam aktivierbaren Polplatten und einer Anzahl von die restliche Auflagefläche bildenden Teilbereichen aus wärmeresistentem Material gebildet wird, wobei das Schweißen auf den wärmeresistenten Teilbereichen stattfindet. Ferner sind bei dieser Haltevorrichtung auf die Polplatten setzbare, durch Magnetkraft festgehaltene Anschlageinrichtungen vorhanden.

Bei diesem Vorgehen kommt es immer wieder vor, dass die zuerst aufgelegte Platine beim Auflegen und Positionieren der nächsten Platine durch diese angestoßen wird und verrutscht, so dass die erste Platine nochmals ausgerichtet werden muss. Diese Gefahr wird dadurch noch vergrößert, dass die einzelnen Platinen möglichst dicht aneinander liegen müssen, um eine für den Schweißvorgang unerwünschte Spaltbildung zu vermeiden. Der vorliegenden Erfindung liegt deshalb die Aufgabe zugrunde, eine Haltevorrichtung der eingangs genannten Art zu schaffen, mit der das Positionieren der einzelnen Platinen relativ zueinander erleichtert wird.

Diese Aufgabe wird erfindungsgemäß dadurch gelöst, dass jeder Polplatte eine nur ihr zugeordnete, für sich magnetisch aktivierbare und die aktivierbare Magneteinrichtung zugeordnet ist und dass die Tragplattenanordnung an ihrer Oberseite ein von Aufnahmelöchern gebildetes Lochraster enthält und die Polplatten entsprechende Durchgangslöcher aufweisen, so dass mit Bezug auf die Tragplattenanordnung fixierte Bolzen insbesondere zum Zentrieren und/oder Anschlagen der Werkstücke oder zum Halten von Zentrier- und/oder Anschlageinrichtungen für die Werkstücke anbringbar sind.

Mit Hilfe der erfindungsgemäßen Haltevorrichtung ist folgendes Vorgehen möglich:

Beim Auflegen der ersten Platine sind noch alle Magneteinrichtungen inaktiv. Hat man die erste Platine in die richtige Position gebracht, werden die Magneteinrichtungen aktiviert, die den durch die erste Platine ganz abgedeckten Polplatten zugeordnet sind. Die erste Platine hält dann durch die auf sie ausgeübte Magnetkraft fest an Ort und Stelle. Anschließend legt man die nächste Platine auf, die man dabei der Verbindungsstrecke entlang fest gegen den Rand der ersten Platine drücken kann, die dabei, da sie bereits festgehalten wird, nicht verrutschen kann. Sodann werden auch die den unter der zweiten Platine und unter der Verbindungsstrecke befindlichen Polplatten zugeordneten Magneteinrichtungen aktiviert. Sollten noch weitere einzelne Platinen vorhanden sein, könne diese anschließend in gleicher Weise angefügt werden.

Dabei kann man zum Zentrieren und/oder Anschlagen der Werkstücke die genannten Bolzen einsetzen, die eine mit Bezug auf die Tragplattenanordnung fixierte Lage einnehmen.

Somit lassen sich die einzelnen Platinen schnell und lagegenau positionieren.

Die Polplatten sind, wie eingangs erwähnt, lösbar mit der Tragplattenanordnung verbunden. Dies bringt im Vergleich mit einer durchgehend einstückigen Auflagefläche den folgenden Vorteil mit sich:

In die Auflagefläche muss eine der jeweiligen Verbindungsstrecke entlang verlaufende Nut eingebracht werden, so dass die miteinander zu verschweißenden Platinenränder unten frei liegen. Ohne eine solche Nut würde die Gefahr bestehen, dass man die beiden jeweiligen Platinen nicht nur miteinander sondern auch mit der Auflagefläche verschweißt.

Auch das Einformen anderer Ausnehmungen in die Auflagefläche kann erforderlich sein, so z.B. in Zusammenhang mit dem Aufsetzen und Wegnehmen der Werkstücke.

Handelt es sich um eine durchgehend einstückige Auflagefläche, muss diese daher beim Umrüsten der Haltevorrichtung, wenn Platinen anderer Umfangsgestalt zusammengeschweißt werden sollen, insgesamt ausgetauscht werden, so dass die mindestens eine seitherige Nut und die evtl. vorhandenen sonstigen Ausnehmungen sozusagen verschwinden und eine den neuen Platinen entsprechende Anzahl neuer Nuten und gegebenenfalls Ausnehmungen eingeformt werden kann. Demgegenüber genügt es bei der erfindungsgemäßen Haltevorrichtung, nur die von den Nuten und gegebenenfalls anderen Ausnehmungen betroffenen Polplatten zu ersetzen. Alle anderen Polplatten können weiterhin verwendet werden.

Ein Ausführungsbeispiel der Erfindung wird nun anhand der Zeichnung erläutert. Es zeigen:
- Fig. 1: eine erfindungsgemäße Vorrichtung in schematischer Draufsicht gemäß Pfeil I in Fig. 2 ohne die aus Fig. 3 hervorgehende Oberflächenstruktur der Polplatten, wobei zwei miteinander zu verschweißende Metallblechplatinen auf die Auflagefläche gelegt sind,
- Fig. 2: die Anordnung nach Fig. 1 in schematischer Seitenansicht gemäß Pfeil II,
- Fig. 3: eine einzelne Polplatte in Draufsicht,
- Fig. 4: die unterhalb der Polplatten angeordnete Tragplatte in Draufsicht in Teildarstellung, wobei der Ort einer Polplatte strichpunktiert angedeutet ist, und
- Fig. 5: die Tragplatte nach Fig. 4 mit aufgesetzten Polplatten nach Fig. 3 im Querschnitt gemäß den Schnittlinien V-V in den Fig. 3 und 4 in vergrößerter Teildarstellung.

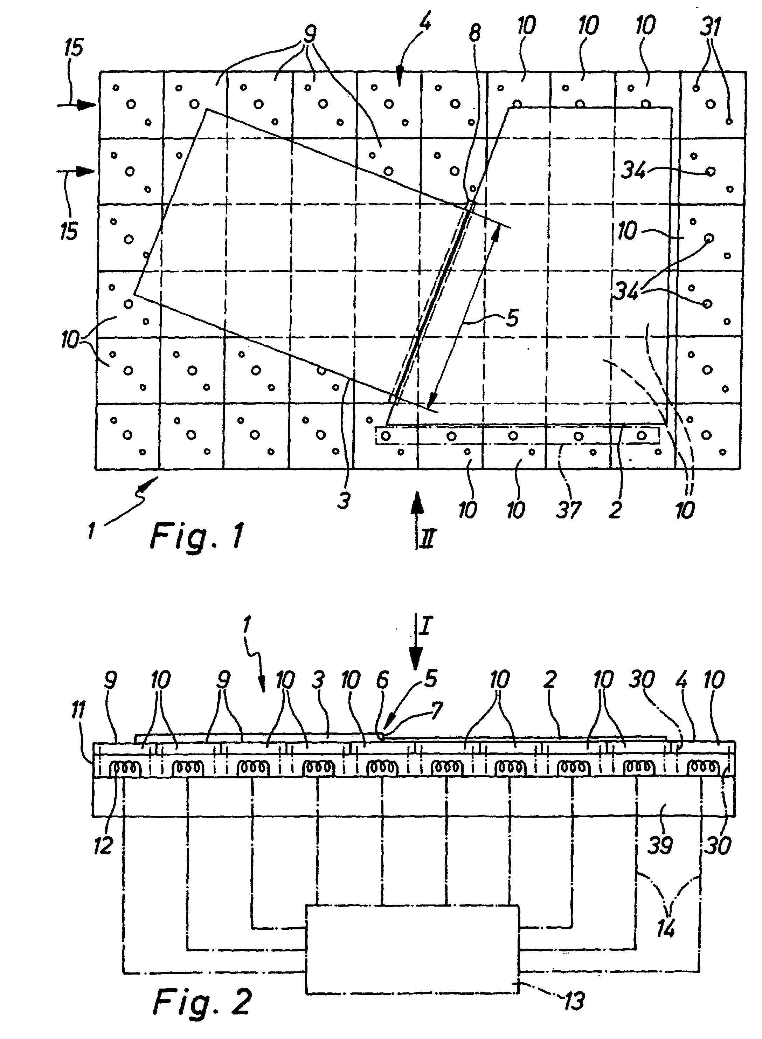

Die aus der Zeichnung hervorgehende Haltevorrichtung 1 dient zum Festhalten von Werkstücken 2, 3 in Gestalt ebener Metallblechplatinen aus magnetisierbarem Material beim randseitigen Zusammenschweißen. In der Zeichnung sind zwei solche einzelne Platinen 2, 3 dargestellt, die nach dem Zusammenschweißen eine entsprechend großflächige, zusammenhängende Platine ergeben. Die beiden Platinen 2, 3 können, wie aus Fig. 2 hervorgeht, eine unterschiedliche Materialdicke haben, prinzipiell jedoch auch gleich dick sein. Die Umfangsgestalt der einzelnen Platinen 2, 3 ist beliebig und richtet sich danach, welche Gesamtplatine sich ergeben soll.

Die Materialdicke liegt normalerweise im Bereich zwischen 0,5 und 2,5 mm, so daß es sich um verhältnismäßig dünnwandige Bleche handelt.

Ein bevorzugtes Anwendungsgebiet von solchen zusammengesetzten Platinen ist die Autoindustrie. Dabei werden sie in Pressen zu den gewünschten Auto-Bestandteilen geformt. Weisen die einzelnen Platinen 2, 3 eine unterschiedliche Dicke auf, liegen bei der sich ergebenden Gesamtplatine verschieden dicke Bereiche vor, wobei man die Anordnung so trifft, daß die Bereiche mit größerer Wanddicke mechanisch stärker beanspruchten Partien des fertigen Teils entsprechen.

Die Haltevorrichtung 1 bildet eine ebene Auflagefläche 4, auf der die einzelnen Platinen 2, 3 - es können auch mehr als zwei solche Platinen sein - so positioniert werden, daß sie entlang einer Verbindungsstrecke 5, über die hinweg sie aneinandergeschweißt werden sollen, mit ihren Rändern 6, 7 gegeneinander stoßen. Diese Verbindungsstrecke 5 kann, wie dargestellt, geradlinig sein. Die Ränder 6, 7 und dementsprechend die Verbindungsstrecke könnten jedoch auch anders konturiert sein.

Das Zusammenschweißen der Platinen 2, 3 erfolgt, wie üblich, durch Laser-Schweißen von oben, das heißt von der der Auflagefläche 4 abgewandten Seite her. Um zu vermeiden, daß die Platinen 2, 3 auf der Auflagefläche 4 festgeschweißt werden, wird in die Auflagefläche 4 unterhalb der Verbindungsstrecke 5 eine dieser entsprechende und sich über mindestens deren Länge erstreckende Nut 8 eingeformt, so daß die Platinenränder 6, 7 unten frei liegen und die Auflagefläche 4 nicht berühren.

Die Auflagefläche 4 ist in eine Mehrzahl von Teilflächen 9 unterteilt. Der Übersichtlichkeit wegen sind nur wenige der Teilflächen mit einem zur Bezugsziffer 9 führenden Bezugsstrich versehen worden. Jede der Teilflächen 9 wird von einer gesonderten Polplatte 10 aus magnetisierbarem Material gebildet, wobei in Fig. 1 ebenfalls nur bei einigen der Polplatten die zugehörigen Bezugsziffern 10 eingetragen worden ist.

Jeder Polplatte 10 ist eine nur ihr zugeordnete Magneteinrichtung 12 zugeordnet, die für sich wahlweise aktivierbar und deaktivierbar ist. Jede Magneteinrichtung 12 wird zweckmäßigerweise von mindestens einer elektrischen Spule gebildet, wobei im Falle des Ausführungsbeispiels zwei Spulen 12a, 12b vorgesehen sind. In Fig. 2 sind die Magneteinrichtungen 12 lediglich symbolisch durch eine einzige Spule angedeutet.

Die Magneteinrichtungen 12 befinden sich unterhalb der Polplatten 10 an einer aus magnetisierbarem Material bestehenden Tragplattenanordnung 11, die von einer über die Polplatten 10 hinweg durchgehenden Tragplatte gebildet wird. Prinzipiell könnte die Tragplattenanordnung auch nicht durchgehend ausgebildet und in einzelne Abschnitte unterteilt sein.

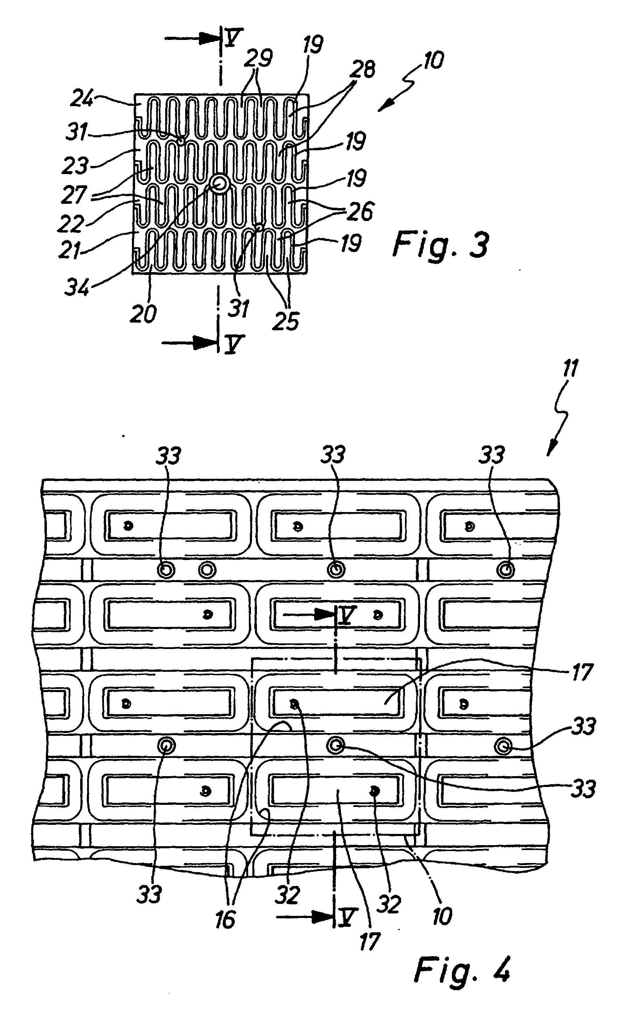

Die Tragplatte 11 enthält von ihrer den Polplatten 10 zugewandten Oberseite (diese ist in Fig. 4 dem Betrachter zugewandt) her eingeformte, ringartig umlaufende Ausnehmungen 16, die jeweils eine Spule 12a, 12b aufnehmen. Die stehengelassenen Tragplattenbereiche bilden bis zur Oberseite der Tragplatte 11 hochstehende Magnetkerne 17, die innerhalb der Spulen 12a, 12b angeordnet sind, und neben den Spulen 12a, 12b hochstehende Magnetjoche 18.

Wird durch die unterhalb der jeweiligen Polplatte 10 angeordneten Spulen 12a, 12b ein elektrischer Strom geleitet, bilden sie jeweils einen Elektromagneten, so daß die betreffende Magneteinrichtung 12 und somit auch die zugehörige Polplatte 10 magnetisch aktiviert sind. Ein auf der Polplatte 10 liegendes Teil, besteht es wie die Platinen 2, 3 aus magnetisierbarem Material, insbesondere im wesentlichen aus Eisen, wird dann angezogen. Im stromlosen Zustand der betreffenden Spulen ist die jeweilige Magneteinrichtung 12 dagegen deaktiviert, so daß die zugehörige Polplatte 10 magnetisch neutral ist und keine Magnetkraft ausübt.

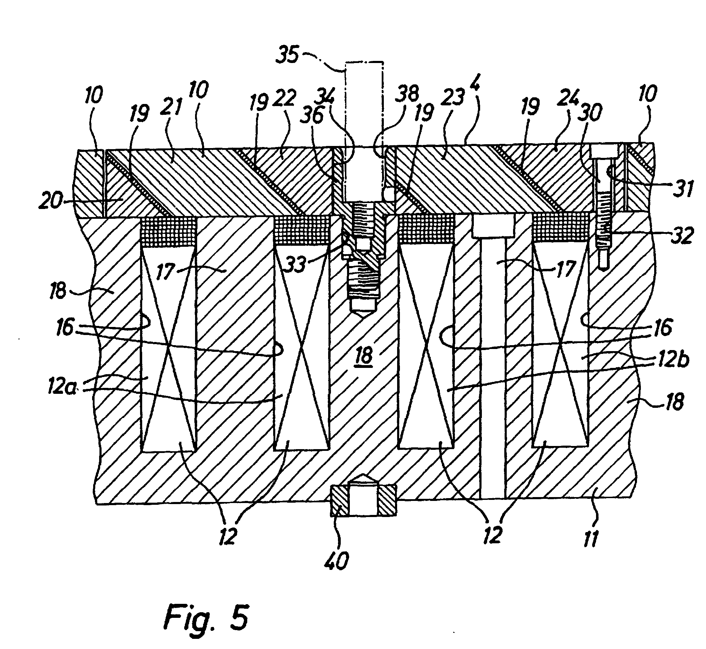

Die Magnetkerne 17 und die Magnetjoche 18 bilden an der Oberseite der Tragplatte 11 abwechselnd magnetische Nordpole und Südpole. Die Polplatten 10 sind jeweils in durch Schlitze 19 magnetisch voneinander getrennte Polplattensegmente 20, 21, 22, 23, 24 unterteilt (beim Ausführungsbeispiel sind fünf solche Polplattensegmente vorhanden), die abwechslungsweise auf einem Nordpol und einem Südpol der Tragplatte 11 aufliegen, so daß einander benachbarte Polplattensegmente unterschiedliche Polarität aufweisen. Um in der Polplattenebene besonders lange Schlitze 19 und somit eine besonders große Magnetkraft zu erhalten, bilden die Polplattensegmente 20 - 24 kammartige Reihen von fingerartigen Vorsprüngen 25, 26, 27, 28 bzw. 29. Die Polplattensegmente 20 - 24 greifen mit diesen kammartigen Vorsprungsreihen ineinander ein, so daß sich auf der Oberseite die aus Fig. 3 hervorgehende Struktur mit den zwischen den fingerartigen Vorsprüngen hin und her verlaufenden Schlitzen 19 ergibt. Durch entsprechende Abschrägungen (siehe Fig. 5) übergreifen die fingerartigen Vorsprünge ein Stück weit das jeweils benachbarte Polplattensegment.

Die Schlitze 19 sind mit geeignetem Material ausgegossen.

Dieser Aufbau der Polplatten 10 aus den Polplattensegmenten 20 - 24 entspricht dem Aufbau sogenannter Pendelpolplatten.

Die Magneteinrichtungen 12 können jeweils für sich angesteuert und somit zusammen mit der jeweils zugehörigen Polplatte 10 aktiviert bzw. aus dem magnetisch aktivierten Zustand deaktiviert werden. In Fig. 2 sind eine allen Magneteinrichtungen 12 zugeordnete Steuereinrichtung 13 und für jede Magneteinrichtung 12 eine diese mit der Steuereinrichtung 13 verbindende Steuerleitungsanordnung 14 strichpunktiert angedeutet. Dabei lassen sich die Magneteinrichtungen 12 in programmierbarer Weise zu Gruppen gleichzeitig aktivierbarer Magneteinrichtungen zusammenfassen, so daß dementsprechend Gruppen gleichzeitig aktivierbarer Polplatten 10 vorhanden sind.

Die zu den Magneteinrichtungen 12, das heißt zu den Spulen 12a, 12b führenden elektrischen Leitungen sind innerhalb der Tragplatte 11 verlegt.

Bevor man die Platinen 2, 3 auflegt, werden alle Magneteinrichtungen 12 deaktiviert, so daß sie magnetisch unwirksam sind. Dann wird eine der beiden Platinen, zum Beispiel die Platine 2, auf der Auflagefläche 4 positioniert und durch Aktivieren der Magneteinrichtungen 12, deren Polplatten 10 sich unterhalb der Platine 2 befinden, fixiert. Das Aktivieren dieser Magneteinrichtungen erfolgt, da sie zu einer der genannten Gruppen zusammengefaßt sind, gleichzeitig. Die an der Verbindungsstrecke 5 vor die Platine 2 vorragenden Polplatten 10 werden zu diesem Zeitpunkt noch nicht aktiviert. Anschließend positioniert man die andere Platine 3, so daß sie entlang der Verbindungsstrecke 5 dicht an der Platine 2 anliegt. Sodann aktiviert man, was wiederum als Gruppe erfolgen kann, die unter der Platine 3 befindlichen Polplatten 10 und die beide Platinen 2, 3 entlang der die Verbindungsstrecke 5 untergreifenden Polplatten 10, so daß auch die zweite Platine 3 in der für das Verschweißen gewünschten Position fixiert wird. Eine eventuell vorhandene weitere Platine wird anschließend nach der Fixierung der zweiten Platine 3 aufgebracht und so weiter.

Die Polplatten 10 sind lösbar mit der Tragplatte 11 verbunden. Auf diese Weise können die Polplatten 10 jeweils für sich von der Tragplatte 11 weggenommen und, falls erforderlich, durch eine neue Polplatte ersetzt werden. Dies ist zum Beispiel in Zusammenhang damit von Vorteil, daß man in dem Falle, wenn man auf das Zusammenschweißen anders geformter Platinen übergeht, bei denen die Verbindungsstrecke an einer anderen Stelle als zuvor verläuft, nur die auf der bisherigen Verbindungsstrecke 5 liegenden und somit von der Nut 8 erfaßten Polplatten 10 auszutauschen braucht, um eine insgesamt "unbeschädigte" Auflagefläche zu erhalten, in die man dann der neuen Verbindungsstrecke entlang eine neue Nut einformen kann.

Die Befestigung der Polplatten 10 erfolgt mit Hilfe von Befestigungsschrauben 30, die jeweils eine Durchtrittsbohrung 31 der betreffenden Polplatte 10 durchgreifen und in eine Gewindebohrung 32 der Tragplatte eingeschraubt sind. Beim Ausführungsbeispiel sind jeder Polplatte 10 zwei sich diametral auf einer Diagonalen gegenüberliegende Befestigungsschrauben 30 zugeordnet.

Die Polplatten 10 bilden, wie aus Fig. 1 hervorgeht, nebeneinander verlaufende Polplattenreihen 15, von denen in Fig. 2 nur die beiden obersten Reihen bezeichnet worden sind. Dabei sind die Polplattenreihen 15 in ihrer Längsrichtung zweckmäßigerweise unversetzt zueinander angeordnet, so daß sie auch rechtwinkelig zu den Polplattenreihen 15 fluchtend aufeinander folgen.

Aus der Zeichnung geht ferner hervor, daß die Tragplatte 11 an ihrer Oberseite ein von Aufnahmelöchern 33 gebildetes Lochraster enthält und die Polplatten 10 entsprechende Durchgangslöcher 34 aufweisen. Beim Ausführungsbeispiel befinden sich die Aufnahmelöcher 33 an den den Polplattenmittelpunkten entsprechenden Stellen der Tragplatte 11. Dementsprechend weisen die Polplatten 10 jeweils ein mittiges Durchgangsloch 34 auf. Mit Hilfe dieser Lochanordnung können mit Bezug auf die Tragplatte 11 fixierte Bolzen angebracht werden, die zum Zentrieren und/oder Anschlagen der Platinen 2, 3 oder zum Halten von Zentrierund/oder Anschlageinrichtungen für die Platinen 2, 3 dienen.

In Fig. 5 ist ein solcher Bolzen 35 strichpunktiert angedeutet, der von der betreffenden Polplatte 10 hochsteht, so daß er einen Anschlag bildet. Ferner ist in Fig. 1, ebenfalls strichpunktiert, ein Anschlaglineal 37 angedeutet, das mittels entsprechender Bolzen mit Bezug auf die Tragplatte 11 fixiert ist.

Der jeweilige Bolzen könnte das Durchgangsloch 34 der betreffenden Polplatte 10 durchgreifen und unmittelbar in das zugehörige Aufnahmeloch 33 der Tragplatte 11 eingesetzt, insbesondere eingeschraubt sein. Zweckmäßigerweise sind jedoch in die Aufnahmelöcher 33 der Tragplatte 11 eingesetzte oder erforderlichenfalls einsetzbare Aufnahmebuchsen 36 vorhanden, die im eingesetzten Zustand nach oben hin über die Tragplatte 11 vorstehen und in das Durchgangsloch 34 der betreffenden Polplatte 10 ragen oder dieses bis zur Polplatten-Oberseite durchgreifen. Solche Aufnahmebuchsen 36 sind beim Ausführungsbeispiel vorgesehen. Sie enthalten oben eine Aufnahmebohrung 38, in die der jeweilige Bolzen 35 einsteckbar oder einschraubbar ist.

Solche Aufnahmebuchsen 36 können von vorneherein in alle Aufnahmelöcher 33 der Tragplatte 11 eingesetzt sein. Sie können jedoch auch fehlen und jeweils nur an den benötigten Stellen eingebracht werden, wo man einen Bolzen einstecken will.

Aus der Zeichnung ist noch ersichtlich, daß die Tragplatte 11 auf einem tischartigen Grundkörper 39 sitzt und dort angeschraubt ist. Dabei kann die Tragplatte 11 an ihrer Unterseite Zentrierzapfen 40 oder dgl. aufweisen, die in den Grundkörper 39 eingreifen.

## Patentansprüche

1. Haltevorrichtung zum Festhalten von Werkstücken (2,3) in Gestalt ebener Metallblechplatinen aus magnetisierbarem Material, deren Ränder (6,7) entlang einer Verbindungsstrecke (5) miteinander verschweißt werden sollen, mit einer magnetisch aktivierbaren und deaktivierbaren Auflagefläche (4) zum Auflegen der miteinander zu verschweißenden Werkstücke (2,3), die von einer Mehrzahl von jeweils eine Teilfläche (9) der Auflagefläche (4) bildenden, gesonderten Polplatten (10) aus magnetisierbarem Material gebildet wird, denen eine aktivierbare und deaktivierbare Magneteinrichtung zugeordnet ist, die sich unterhalb der Polplatten (10) an einer Tragplattenanordnung (11) befindet, **dadurch gekennzeichnet, dass** jeder Polplatte (10) eine nur ihr zugeordnete, für sich magnetisch aktivierbare und deaktivierbare Magneteinrichtung (12) zugeordnet ist, dass die Polplatten (10) lösbar mit der Tragplattenanordnung (11) verbunden sind und dass die Tragplattenanordnung (11) an ihrer Oberseite ein von Aufnahmelöchern (33) gebildetes Lochraster enthält und die Polplatten (10) entsprechende Durchgangslöcher (34) aufweisen, so dass mit Bezug auf die Tragplattenanordnung (11) fixierte Bolzen (35) insbesondere zum Zentrieren und/oder Anschlagen der Werkstücke (2,3) oder zum Halten von Zentrier- und/oder Anschlageinrichtungen (37) für die Werkstücke (2,3) anbringbar sind.

2. Haltevorrichtung nach Anspruch 1, **dadurch gekennzeichnet, daß** die Polplatten (10) nebeneinander verlaufende Polplattenreihen (15) bilden.

3. Haltevorrichtung nach Anspruch 2, **dadurch gekennzeichnet, daß** die Polplattenreihen (15) in ihrer Längsrichtung unversetzt zueinander angeordnet sind.

4. Haltevorrichtung nach einem der Ansprüche 1 bis 3, **dadurch gekennzeichnet, daß** die Polplatten (10) eine rechteckige oder quadratische Umfangsgestalt aufweisen.

5. Haltevorrichtung nach einem der Ansprüche 1 bis 4, **dadurch gekennzeichnet, daß** die Tragplattenanordnung (11) von einer über die Polplatten (10) hinweg durchgehenden Tragplatte gebildet wird.

6. Haltevorrichtung nach einem der Ansprüche 1 bis 5, **dadurch gekennzeichnet, daß** die Tragplattenanordnung (11) von ihrer den Polplatten (10) zugewandten Oberseite her eingeformte Ausnehmungen (16) zur Aufnahme von die Magneteinrichtungen (12) bildenden elektrischen Spulen (12a, 12b) enthält und die stehengelassenen Tragplattenbereiche Magnetkerne (17) und -joche (18) bilden.

7. Haltevorrichtung nach einem der Ansprüche 1 bis 6, **dadurch gekennzeichnet, daß** die Aufnahmelöcher (33) an den den Polplatterimitten entsprechenden Stellen der Tragplattenanordnung (11) angeordnet sind und die Polplatten (10) jeweils ein mittiges Durchgangsloch (34) aufweisen.

8. Haltevorrichtung nach Anspruch 7, **dadurch gekennzeichnet, daß** in die Aufnahmelöcher (33) der Tragplattenanordnung (11) eingesetzte oder einsetzbare Aufnahmebuchsen (36) zur Aufnahme der Bolzen vorhanden sind, die im eingesetzten Zustand nach oben hin über die Tragplattenanordnung (11) vorstehen und in das Durchgangsloch (34) der betreffenden Polplatte (10) ragen oder dieses durchgreifen.

9. Haltevorrichtung nach einem der Ansprüche 1 bis 8, **dadurch gekennzeichnet, daß** die Polplatten (10) jeweils in durch Schlitze (19) magnetisch voneinander getrennte Polplattensegmente (20, 21, 22, 23, 24) unterteilt sind, wobei einander benachbarte Polplattensegmente bei aktivierter Magneteinrichtung (12) unterschiedliche Polarität aufweisen.

10. Haltevorrichtung nach Anspruch 9, **dadurch gekennzeichnet, daß** die Polplattensegmente (20, 21, 22, 23, 24) kammartige Reihen von fingerartigen Vorsprüngen (25, 26, 27, 28, 29) bilden und mit ihren kammartigen Vorsprungsreihen ineinandergreifen.

## Claims

1. Holding fixture for holding workpieces (2, 3) in the form of flat sheet metal blanks made of a material capable of being magnetised, the edges (6, 7) of which are to be welded together along a joint section (5), comprising a locating surface (4) capable of magnetic activation and deactivation for locating the workpieces (2, 3) to be welded together, said surface being represented by a plurality of pole plates (10) made of a material capable of being magnetised and each forming a part surface (9) of the locating surface (4), said pole plates being assigned a magnetic device capable activation and deactivation and located below the pole plates (10) on a support plate arrangement (11), **characterised in that** each pole plate (10) is assigned its own magnetic device (12) capable of magnetic activation and deactivation, **in that** the pole plates (10) are detachably attached to the support plate arrangement (11), and **in that** the top of the support plate arrangement (11) is provided with a grid of locating holes (33) and the pole plates (10) have corresponding through-holes (34), enabling bolts (35) fixed relative to the support plate arrangement (11) to be installed, in particular for centring and/or stopping the workpieces (2, 3) or for retaining centring and/or stopping devices (37) for the workpieces (2, 3).

2. Holding fixture according to claim 1, **characterised in that** the pole plates (10) form pole plate rows (15) lying adjacent to one another.

3. Holding fixture according to claim 2, **characterised in that** the pole plate rows (15) are arranged without relative offset in their longitudinal direction.

4. Holding fixture according to any of claims 1 to 3, **characterised in that** the pole plates (10) have a rectangular or square circumference.

5. Holding fixture according to any of claims 1 to 4, **characterised in that** the support plate arrangement (11) is represented by a continuous support plate extending over the pole plates (10).

6. Holding fixture according to any of claims 1 to 5, **characterised in that** the top of the support plate arrangement (11), which faces the pole plates (10), is provided with integral recesses (16) for the location of electric coils (12a, 12b) forming the magnetic devices (12), while the remaining support plate areas form magnet cores (17) and yokes (18).

7. Holding fixture according to any of claims 1 to 6, **characterised in that** the locating holes (33) are arranged at those points of the support plate arrangement (11) which correspond to the pole plate centres, and **in that** each pole plate (10) has a central through-hole (34).

8. Holding fixture according to claim 7, **characterised in that** locating bushes (36) installed or installable in the locating holes (33) of the support plate arrangement (11) are provided for the location of the bolts, which project above the support plate arrangement (11) in the installed position and extend or pass through the through-hole (34) of the respective pole plate (10).

9. Holding fixture according to any of claims 1 to 8, **characterised in that** each pole plate (10) is divided into pole plate segments (20, 21, 22, 23, 24) magnetically separated by slots (19), adjacent pole plate segments having different polarities when the magnetic device (12) is activated.

10. Holding fixture according to claim 9, **characterised in that** the pole plate segments (20, 21, 22, 23, 24) form comb-like rows of finger-type projections (25, 26, 27, 28, 29), their comb-like projections engaging one another.

## Revendications

1. Dispositif de maintien pour fixer des pièces (2, 3) sous forme de platines planes en tôle métallique constituées d'une matière magnétisable, dont les bords (6, 7) doivent être soudés entre eux le long d'un parcours de liaison, comportant une surface de support(4) activable et désactivable magnétiquement pour y placer des pièces (2, 3) à souder entre elles, laquelle est formée par une pluralité de plaques polaires (10) séparées en matière magnétisable, formant une surface partielle (9) de la surface de support (4), auxquelles est associé un dispositif magnétique activable et désactivable qui se trouve au-dessous des plaques polaires (10) sur un agencement de plaques porteuses (11), **caractérisé en ce qu'**à chaque plaque polaire (10) est associé un dispositif magnétique (12) activable et désactivable magnétiquement de manière autonome, qui est associé à elle seule, **en ce que** les plaques polaires (10) sont reliées de manière séparable à l'agencement de plaques porteuses (11) et **en ce que** l'agencement de plaques porteuses (11) contient, sur sa face supérieure, une trame perforée formée de trous récepteurs (33), et les plaques polaires (10) présentent des trous traversants (34) correspondants, ce qui fait que l'on peut placer des tiges (35), fixées par rapport à l'agencement de plaques porteuses (11), en particulier pour le centrage et/ou la butée des pièces (2, 3) ou pour maintenir des dispositifs de centrage et/ou de butée (37) pour les pièces (2, 3).

2. Dispositif de maintien selon la revendication 1, **caractérisé en ce que** les plaques polaires (10) forment des rangées de plaques polaires (15) s'étendant côte à côte.

3. Dispositif de maintien selon la revendication 2, **caractérisé en ce que** les rangées de plaques polaires (15) sont disposées non décalées les unes par rapport aux autres dans la direction de leur longueur.

4. Dispositif de maintien selon l'une des revendications 1 à 3, **caractérisé en ce que** les plaques polaires (10) présentent un contour de forme rectangulaire ou carrée.

5. Dispositif de maintien selon l'une des revendications 1 à 4, **caractérisé en ce que** l'agencement de plaques porteuses (11) est formé par une plaque porteuse s'étendant en continu sur les plaques polaires (10).

6. Dispositif de maintien selon l'une des revendications 1 à 5, **caractérisé en ce que** l'agencement de plaques porteuses (11) contient des évidements (16), formés depuis sa face supérieure tournée vers les plaques polaires (10), pour recevoir des bobines électriques (12a, 12b) formant les dispositifs magnétiques (12), et les zones des plaques porteuses qui subsistent forment des noyaux magnétiques (17) et des culasses magnétiques (18).

7. Dispositif de maintien selon l'une des revendications 1 à 6, **caractérisé en ce que** les trous récepteurs (33) sont disposés aux emplacements de l'agencement de plaques porteuses (11) correspondant aux centres des plaques polaires, et les plaques polaires (10) présentent chacune un trou traversant (34) central.

8. Dispositif de maintien selon la revendication 7, **caractérisé en ce que** des douilles de réception (36), insérées ou pouvant être insérées dans les trous récepteurs (33) de l'agencement de plaques porteuses (11), sont prévues pour recevoir les tiges qui, à l'état inséré, font saillie vers le haut de l'agencement de plaques porteuses (11) et s'engagent dans le trou traversant (34) de la plaque polaire (10) concernée, ou traversent celui-ci.

9. Dispositif de maintien selon l'une des revendications 1 à 8, **caractérisé en ce que** les plaques polaires (10) sont divisées chacune en segments de plaques polaires (20, 21, 22, 23, 24) séparés magnétiquement les uns des autres par des fentes (19), des segments de plaques polaires adjacents présentant une polarité différente lorsque le dispositif magnétique (12) est activé.

10. Dispositif de maintien selon la revendication 9, **caractérisé en ce que** les segments de plaques polaires (20, 21, 22, 23, 24) forment des rangées, de type peigne, de saillies (25, 26, 27, 28, 29) de type doigts et s'interpénètrent avec leurs rangées de saillies de type peigne.
